# EUROPEAN PATENT APPLICATION

(11) **EP 4 071 692 A1**
(43) Date of publication of application: **12.10.2022**
(21) Application number: 20896135.9
(22) Date of filing: 09.04.2020
(51) Int. Cl.: G06Q 20/38, G06Q 50/10

(54) **TARGET OBJECT MANAGEMENT METHOD, SMART CONTRACT, AND MANAGEMENT DEVICE**

(30) Priority: 05.12.2019 JP 2019220303
(71) Applicant: Baccor Dapps Inc., Kobe-shi, Hyogo 658-0032 (JP)
(72) Inventor: HARUNA, Yukio, Kobe-shi, Hyogo 658-0032 (JP)
(74) Representative: RGTH
(86) International application number: PCT/JP2020/016051
(87) International publication number: WO 2021/111653

(57) **Abstract**

A method of managing an object according to the disclosure includes executing, by a smart contract implemented on a blockchain, an operation on a non-fungible token. The non-fungible token is identified by an identifier included in a code assigned to the object.

## Description

### TECHNICAL FIELD

The present disclosure relates to a method of managing an object, a smart contract, and a management device

### BACKGROUND ART

PATENT LITERATURE 1 discloses calling a ticket ownership registration site according to a URL included in a two-dimensional code.

PATENT LITERATURE 2 discloses a two-dimensional code including information on a contract and a contract address. PATENT LITERATURE 2 discloses a terminal device 220 accessing a smart contract by using the contract address included in the two-dimensional code.

### CITATION LIST

### [PATENT LITERATURE]

PATENT LITERATURE 1: Japanese Laid-Open Patent Publication No. 2019-185510
PATENT LITERATURE 2: Japanese Laid-Open Patent Publication No. 2018-36893
PATENT LITERATURE 3: Japanese Laid-Open Patent Publication No. 2005-100235
PATENT LITERATURE 4: Japanese Laid-Open Patent Publication No. 2019-160316

### SUMMARY OF INVENTION

The present inventor has come up with an idea that a non-fungible token (NFT) and an object other than a non-fungible token are managed in association with each other. Neither PATENT LITERATURE 1 nor PATENT LITERATURE 2 has disclosed such an idea. The present disclosure provides a new technical method for managing a non-fungible token and an object other than a non-fungible token in association with each other.

One aspect of the present disclosure is a method of managing an object. The method of the present disclosure includes executing, by a smart contract implemented on a blockchain, an operation on a non-fungible token that is identified by an identifier included in a code assigned to the object.

Another aspect of the present disclosure is a smart contract. The smart contract of the present disclosure is configured to acquire an identifier included in a code assigned to an object, and execute an operation on a non-fungible token that is identified by the identifier.

Still another aspect of the present disclosure is a device for managing an object. The management device of the present disclosure is configured to execute a process including: acquiring an identifier included in a code assigned to the object; and calling a smart contract implemented on a blockchain, via a network, in order to cause the smart contract to execute an operation on a non-fungible token that is identified by the identifier.

Further details will be described later as an embodiment.

### BRIEF DESCRIPTION OF DRAWINGS

FIG. 1 illustrates card buying/selling management by a management server.
FIG. 2 is a front view of a card.
FIG. 3 is a flowchart showing an ownership registration procedure.
FIG. 4 is a flowchart showing an ownership secondary-sale procedure.
FIG. 5 is a flowchart showing an ownership purchase procedure.
FIG. 6 is a flowchart showing an owner history reference procedure.

### DESCRIPTION OF EMBODIMENTS

### <1. Outlines of object management method, smart contract, and management device>

(1) A method of managing an object according to an embodiment includes executing, by a smart contract implemented on a blockchain, an operation on a non-fungible token. The non-fungible token is identified by an identifier included in a code assigned to the object. The object only needs to be an object other than a non-fungible token, and is not particularly limited. The object is a tangible object or an intangible object such as digital data, for example.

A blockchain is constituted by a P2P computer network, and is Ethereum, for example. Ethereum functions as a platform for building decentralized applications and smart contracts.

A crypto-asset (virtual currency) used for Ethereum is called Ether. Ether can be used for payments and the like, and is exchangeable with legal currency. Thus, Ether has the property of currency. Ether has fungibility like legal currency, and therefore is also called a fungible token.

Tokens that can be transacted on the blockchain include a non-fungible token (NFT) as described above in addition to a fungible token. In contrast to the fungible token, the NFT has no fungibility. An NFT may be different in value from other NFTs. For example, the NFT is issued as a digital asset to be transacted in a computer game. An NFT may have a unique value distinguishable from other NFTs. Therefore, the NFT has a unique identifier (NFT-ID) that makes the NFT distinguishable from other NFTs. Meanwhile, the fungible token such as Ether is the same in value as other fungible tokens and is not required to be distinguishable, and therefore does not have an identifier such as an NFT-ID.

Like the fungible token, the NFT can be transacted on the blockchain. A transaction history of the NFT is recorded on the blockchain. The owner of the NFT and the owner history are also recorded on the blockchain.

The NFT is a token issued according to Ethereum Request for Comments (ERC) 721, for example. The NFT based on the ERC-721 is called an NFT-721 token.

The smart contract is implemented on the blockchain, and automatically executes a protocol for contract or the like. An execution history of the smart contract is recorded on the blockchain constituted by the P2P network. Therefore, using the smart contract ensures transparency of the contract.

Management of an object is, for example, management of change, of the owner of a non-fungible token, due to buying and selling (transaction) of the object. Management of an object is not limited to management of an owner change, and may include various managements executable by operating non-fungible tokens according to the smart contract.

In managing the object, a main target of transaction (object of transaction) may be the object, or may be a non-fungible token. For example, the main target of the transaction may be the object while a secondary target of the transaction may be the non-fungible token. In this case, the non-fungible token is operated to make the transaction of the object reliable.

In contrast to the above, in managing the object, the main target of the transaction may be the non-fungible token while the secondary target of the transaction may be the object. In this case, the object is transacted in order to make the transaction of the non-fungible token smooth. Then, the non-fungible token is operated in association with the transaction of the object.

In this embodiment, the non-fungible token to be operated by the smart contract is identified by the identifier included in the code assigned to the object. Since the identifier is included in the code assigned to the object, association between the object and the non-fungible token is realized. The identifier is used for calling the smart contract, for example. Specifically, the identifier is given to the smart contract when the smart contract is called. Preferably, the code is in a machine readable form, and is a one-dimensional code or a two-dimensional code, for example. The code may be formed of symbols or graphics that are also human readable. The code may include data other than the identifier. An example of the other data is a domain for accessing a management server described later.

Assignment of the code to the object is physically attaching the code to the object, for example. Examples of the physical attachment include printing, pasting, and engraving. As for assignment of the code to the object, the code may not necessarily be physically integrated with the object, as long as it is objectively obvious that the code is assigned to the object. For example, the code may be displayed in a digital image that is the object.

(2) The operation on the non-fungible token may include an operation for changing the owner of the non-fungible token. In this case, when the owner of the object has been changed, the smart contract can change the owner of the non-fungible token associated with the object.

(3) The operation on the non-fungible token may include keeping, by the smart contract, the non-fungible token for the owner of the non-fungible token. In this case, the owner of the non-fungible token can deposit the non-fungible token to the smart contract.

(4) The operation on the non-fungible token may further include storing, in the smart contract, a password that is set for the non-fungible token being kept in the smart contract. In this case, the password is set for the non-fungible token being kept in the smart contract.

(5) The operation on the non-fungible token may further include setting, by the smart contract, a user who has inputted the password as a new owner of the non-fungible token being kept in the smart contract. In this case, the user who has inputted the password can be the new owner of the non-fungible token.

(6) The method according to the embodiment may further include, when the operation on the non-fungible token has been executed, executing, by the smart contract, an operation of paying a crypto-asset on the blockchain to a right holder associated with the non-fungible token. In this case, the right holder can receive a benefit. The right holder is, for example, a copyright holder related to the object or the non-fungible token, and the benefit is, for example, copyright royalty.

(7) The method according to the embodiment may further include: acquiring, by the management device, the identifier included in the code assigned to the object; and calling, by the management device, the smart contract via a network in order to cause the smart contract to execute the operation on the non-fungible token that is identified by the identifier.

(8) A smart contract according to the embodiment is implemented on a blockchain. The smart contract is configured to acquire an identifier included in a code assigned to an object, and execute an operation on a non-fungible token that is identified by the identifier.

(9) The operation on the non-fungible token may include an operation for changing the owner of the non-fungible token.

(10) The operation on the non-fungible token may include keeping the non-fungible token for the owner of the non-fungible token.

(11) The operation on the non-fungible token may further include storing a password that is set for the non-fungible token being kept in the smart contract.

(12) The operation on the non-fungible token may further include setting, by the smart contract, a user who has inputted the password, as a new owner of the non-fungible token being kept in the smart contract.

(13) The smart contract may be configured to, when the operation on the non-fungible token has been executed, execute an operation of paying a crypto-asset on the blockchain to a right holder associated with the non-fungible token.

(14) A device for managing an object according to the embodiment is configured to execute a process including: acquiring an identifier included in a code assigned to the object; and calling a smart contract implemented on a blockchain, via a network, in order to cause the smart contract to execute an operation on a non-fungible token that is identified by the identifier.

### <2. Examples of outlines of object management method, smart contract, and management device>

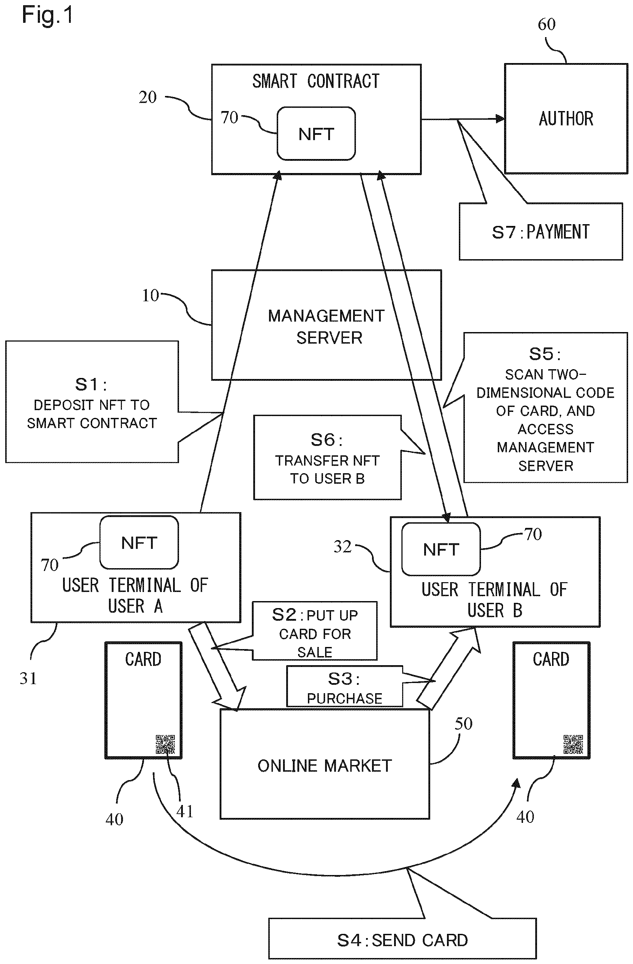

FIG. 1 shows the outline of processing of a management server 10 accompanying buying and selling of an object 40. The management server 10 is provided on the Internet. The management server 10 is constituted by a computer including a memory and a processor connected to the memory. The management server 10 includes an interface for network access. The memory stores therein a computer program that causes the computer to function as the management server 10 of the embodiment. The processor executes the computer program stored in the memory. The management server 10 controls displays on user terminals 31, 32, and can receive user operations performed to the terminals 31, 32. The terminals 31, 32 can access the management server 10 and a smart contract described later via the network.

In this embodiment, the management server 10 is a management device used for managing an object. If each of the terminals 31, 32 has functions of the management server 10 (e.g., smart contract calling function described later), each of the terminals 31, 32 can function as a management device. If the terminals 31, 32 have the functions of the management server 10, the management server 10 may be dispensed with.

In this embodiment, an example of the object 40 is a trading card (hereinafter referred to as "card 40") that is a tangible object. The card 40 is an actual item, and can be easily transacted. For example, the card 40 is transacted on an online market 50. The online market 50 is, for example, a flea market for customer-to-customer (C-to-C) transactions. The online market 50 is available through an online market application installed on the user terminals 31, 32. The card 40 is a commodity that is put up on the online market 50 by a user as a seller, and another user as a buyer can purchase the card 40.

Payment for the purchase can be made in legal currency using a credit card or the like, for example. When buying and selling of the card 40 have been done on the online market 50, the card 40 is sent from the user as the seller to the user as the buyer. Since the card 40 is a tangible object, transfer of the card 40 to the buyer is performed as transfer of possession of the card 40 in the real world. Since the object 40 need not be transacted on a blockchain, even a person who is unfamiliar with the blockchain can easily perform the transaction.

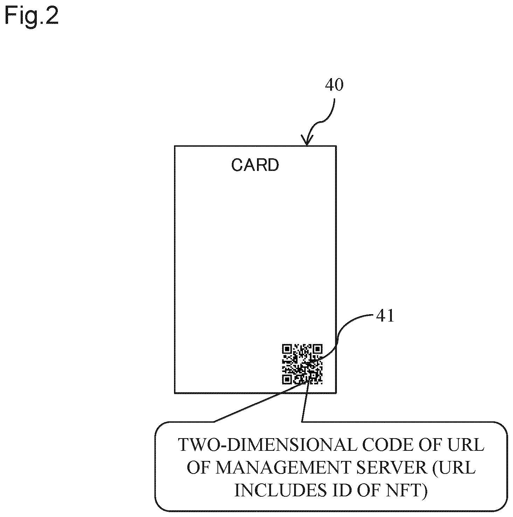

As shown in FIG. 2, a code 41 is assigned to the card 40 of the embodiment. An example of the code 41 is a two-dimensional code 41. In this embodiment, the two-dimensional code 41 is configured to express a URL for network access to the management server 10. The two-dimensional code 41 is scanned by a two-dimensional code scanning function of the user terminals 31, 32. Each of the terminals 31, 32 is a smartphone with a camera, for example. An application installed on the terminals 31, 32 has the two-dimensional code scanning function.

In this embodiment, a non-fungible token 70 (NFT 70) is used for managing the card 40 as an object. When a plurality of objects 40 are managed, the plurality of objects 40 are respectively associated with different NFTs 70. The NFT 70 has a unique identifier (NFT_ID). The NFT 70 is an NFT-721 token, for example. The following description will be made on a case where the NFT 70 is an NFT-721 token.

An NFT can be transacted on an Ethereum network, similar to Ether which is a crypto-asset to be transacted on the Ethereum network. Ethereum is a blockchain network on a Peer-to-Peer (P2P) network.

An operation on the NFT 70, such as transaction of the NFT 70, is executed by a smart contract 20 that is built on a blockchain such as an Ethereum network. The smart contract 20 is a computer program written on the blockchain. The smart contract 20 is built when the computer program is implemented on a computer network constituting the blockchain. The smart contract is operated when the computer program is executed on the computer network constituting the blockchain. The smart contract 20 has an address (contract address) on the blockchain. The smart contract 20 is stored at the contract address. In this embodiment, the smart contract 20 is called and executed by the management server 10 via a network such as the Internet. A smart contract execution history is recorded on the blockchain of Ethereum or the like. The smart contract 20 may be called by the terminals 31, 32.

In this embodiment, the card 40 is associated with the NFT 70. Since the card 40 is associated with the NFT 70 in a one-to-one correspondence, the identifier (NFT_ID) of the NFT 70 is included in data (URL) expressed by the two-dimensional code 41 assigned to the card 40. The identifier (NFT_ID) of the NFT 70 is included in the URL expressed by the two-dimensional code 41 assigned to the card 40 associated with the NFT 70. That is, the URL assigned to the card 40 includes a domain of the management server 10 and the identifier (NFT_ID) of the NFT 70. That is, the URL includes the data to be used by the management server 10 to call the smart contract 20 for the operation on the NFT 70. If the management server 10 is omitted, the domain of the management server 10 may be omitted from the data expressed by the two-dimensional code 41. Even when the management server 10 is used, if the terminals 31, 32 that read the two-dimensional code 41 grasp in advance the domain of the management server 10, the domain of the management server 10 may be omitted from the data expressed by the two-dimensional code 41.

In this embodiment, the URL may include, in addition to the NFT_ID, an address of the NFT 70 on the Ethereum, an ID of the NFT, and a secret key of an Ethereum address to be a payment source for a fee (Gas on the Ethereum) for calling the smart contract 20.

Upon receiving network access using the URL assigned to the card 40, the management server 10 can identify the NFT 70 corresponding to the card 40 that has caused the network access, from the identifier (NFT_ID), of the NFT 70, included in the URL. The URL includes the data necessary for calling the smart contract 20 for the operation on the NFT 70. The management server 10 is configured to call the smart contract 20 for operating the NFT 70 associated with the card 40, by using the data included in the URL. Thus, in this embodiment, the card 40 and the NFT 70 are associated with each other via the URL assigned to the card 40. The URL may not necessarily include the NTF_ID itself, and may include other data that allow the management server 10 or the like to identify the NFT_ID associated with the card 40.

The owner of the NFT 70 is changed on the Ethereum with change, of the owner (possessor) of the card 40, caused by buying and selling of the card 40. The management server 10 executes a process necessary for, on the Ethereum, changing the owner of the NFT 70 with the change of the owner of the card 40. In contrast to the above, the card 40 may be bought and sold in order to change the owner of the NFT 70 (in order to buy and sell the NFT 70).

In this embodiment, since the card 40 and the NFT 70 are associated with each other, the owner of the NFT 70 that is a digital asset is the owner of the card 40 that is a tangible object. Since the owner and the owner history of the NFT 70 are recorded on the blockchain, the owner and the owner history of the card 40 as the tangible object are practically recorded on the blockchain. Moreover, in this embodiment, since the card 40 and the NFT 70 are associated with each other, transaction of the card 40 in the real world can be linked to transaction of the NFT 70 on the blockchain.

The outline of a procedure for changing the owner of the NFT 70 with change of the owner of the card 40, is as follows. Here, a user A is the current owner of the card 40 and the NFT 70 associated with the card 40. Firstly, the user A, in advance of selling the card 40, accesses the management server 10 via the terminal 31, and performs an operation of abandoning the ownership of the NFT 70. Abandoning the ownership of the NFT 70 is performed by the user A depositing the NFT 70 in the smart contract 20 (step S1 in FIG. 1).

When the operation of depositing the NFT 70 in the smart contract 20 has been performed, the NFT 70 is transmitted from an address (Ethereum address) of the user A to the contract address of the smart contract 20. The smart contract 20 receives the NFT 70 abandoned by the user A. Thus, the smart contract 20 enters the state of keeping the NFT 70. In the terminal 31 of the user A, an application, having a function of accessing the management server 10 and a function of retaining and transacting Ethereum tokens such as the NFT 70, has been installed in advance.

After abandoning the ownership of the NFT 70, i.e., after depositing the ownership of the NFT 70 in the smart contract 20, the user A puts up the card 40 for sale on the online market 50 (step S2 in FIG. 1). A user B purchases the card 40 (step S3 in FIG. 1). The user B pays the user A for the card 40 using legal currency. Thus, in this embodiment, payment by the buyer is performed with legal currency while management is performed using the blockchain such as the Ethereum. Therefore, the buyer can purchase the card 40 even without a crypto-asset.

How to buy and sell the card 40 is not particularly limited. However, when buying and selling are performed at the online market 50, the user B as the buyer only needs to have an application for using the online market 50. At the time of purchasing the card 40, the user B need not have the application having the function of accessing the management server 10 and the function of transacting Ethereum tokens such as the NFT 70. That is, at the time of purchasing the card 40, the user B need not be a user of the Ethereum. Therefore, many users of the online market 50 can be candidates as the buyer, which facilitates sale of the card 40.

The card 40 sold by the user A is sent to the user B as the buyer through a delivery service or the like (step S4 in FIG. 1). Thus, the user B acquires the card 40 that is an actual item.

After having acquired the card 40, the user B, with the terminal 32, scans the two-dimensional code 41 assigned to the card 40, and accesses the management server 10 via the terminal 32 (step S5 in FIG. 1). The user B performs an operation of acquiring the ownership of the NFT 70 via the terminal 32. Thus, the NFT 70 having been deposited by the user A is transmitted from the smart contract 20 to the address (Ethereum address) of the user B (step S6 in FIG. 1). The user B can refer to the transmitted NFT 70 using the terminal 32.

In this embodiment, when transfer of the ownership of the NFT 70 has occurred between the users, the smart contract 20 executes a transaction of paying a crypto-asset (Ether) to a right holder predetermined with respect to the NFT 70 (step S7 in FIG. 1). The predetermined right holder is, for example, a copyright holder (author) 60 of the card 40. A trigger of executing the transaction of payment only needs to be an event related to change in the ownership of the NFT 70. For example, the trigger may be step S1 in FIG. 1 or step S6 in FIG. 1. Ether to be paid to the right holder is transmitted from the terminal 31 of the user A as the seller or the terminal 32 of the user B as the buyer to the smart contract 20.

Hereinafter, an owner changing procedure including the procedure shown in FIG. 1 will be described in detail.

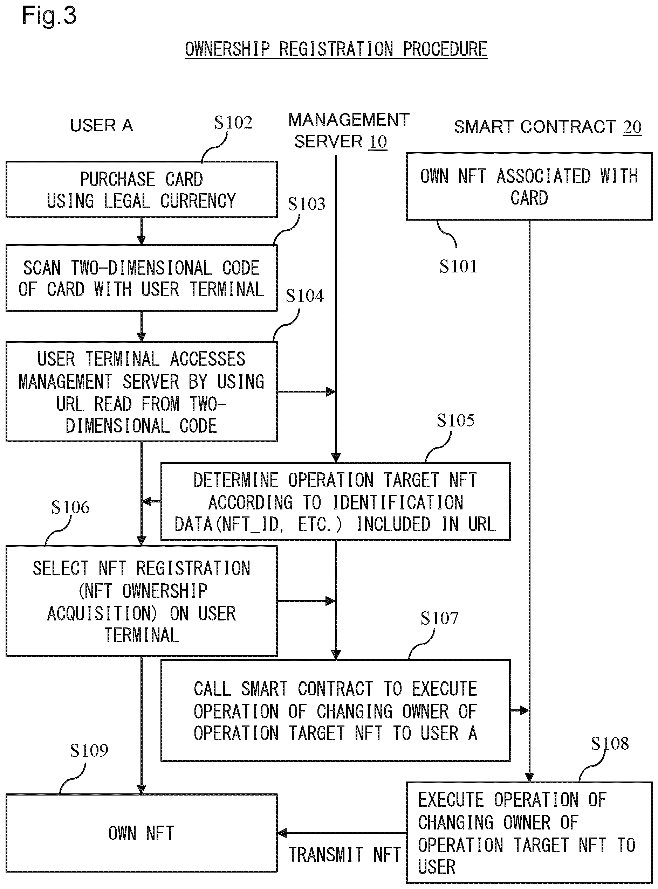

FIG. 3 shows an ownership registration procedure when the user A purchases the card 40 (i.e., primary sale of the card 40 by a dealer of the card 40).

At the time of sale of the card 40, the smart contract 20 possesses the NFT 70 associated with the card 40 (step S101). In other words, the smart contract 20 keeps the deposited NFT 70. Although an Ethereum fee (Gas) is charged upon calling of the smart contract 20 and transmission of the NFT 70, this fee is set to be paid by the seller. That is, the card 40 is sold at a price including Ether for the fee (Gas). Therefore, the user A need not pay for the fee (Gas) at the time of ownership registration. As a result, even if the user A does not have the Ether at the time of ownership registration, this does not hinder the registration operation. The Ether (crypto-asset) equivalent to the fee (Gas) is stored at an Ethereum address provided in association with the NFT 70. The fee (Gas) required for the operation of the NFT 70 is paid from the Ether accumulated in the Ethereum address corresponding to the NFT 70.

The user A purchases the card 40 from the dealer through payment of legal currency, and acquires the card 40 that is an actual item (step S102). The user A, with the terminal 31, scans the two-dimensional code 41 assigned to the card 40 (step S103). Through the scanning of the two-dimensional code 41, the terminal 31 reads the URL assigned to the card 40.

After reading the URL, the terminal 31 executes network access according to the URL (step S104). This allows the terminal 31 to access the management server 10. Upon receiving the network access from the terminal 31, the management server 10 determines the NFT 70 to be an operation target, according to the NFT_ID included in the URL used for the access (step S105). That is, when receiving the network access, the management server 10 acquires the NFT_ID included in the URL, and identifies the NFT 70 as the operation target, according to the acquired NFT_ID.

The management server 10 accesses the Ethereum network, and refers to the owner of the NFT 70 determined as the operation target. When the owner of the NFT 70 determined as the operation target is the smart contract 20, that is, when the smart contract 20 keeps the deposited NFT 70, the management server 10 urges the user A having accessed the management server 10 (step S104) to register the ownership of the NFT 70. The user A performs, on the terminal 31, an operation of selecting registration of the ownership of the NFT 70 (step S106), whereby a registration request is transmitted from the terminal 31 to the management server 10.

Upon receiving the registration request, the management server 10 calls the smart contract 20 to cause the smart contract 20 to execute an operation of changing the owner of the NFT 70 as the operation target from the smart contract 20 to the user A (step S107). When calling the smart contract 20, the management server 10 gives the NFT_ID (identifier of the NFT 70) to the smart contract 20. Thus, the smart contract 20 acquires the NFT_ID (identifier of the NFT 70). The smart contract 20 acquires the NFT_ID from the transmission source (management server 10 or the like) of the NFT_ID via the network. The smart contract 20 identifies the NFT 70 as the operation target, according to the NFT_ID.

The called smart contract 20 changes the owner of the NFT 70 as the operation target, from the smart contract 20 to the user A. That is, the smart contract 20 transmits the NFT 70 to the address (Ethereum address) of the user A who is a new owner (step S108). Thus, the user A enters the state of owning the NFT 70 associated with the card 40. It is recorded on the Ethereum network that the owner of the NFT 70 has been changed to the user A.

Through the aforementioned procedure, the user A, who has purchased the card 40 with legal currency, can own the NFT 70 that is an asset on the Ethereum. The user A, having the ownership of the NFT 70, can use the NFT 70 and a network service or a digital content associated with the NFT 70. The network service associated with the NFT 70 is a game, for example. The content associated with the NFT 70 is E-book, music, or video, for example. The network service or the digital content is associated with the card 40 via the NFT 70. Therefore, with the transfer of the ownership of the card 40, the usage right of the network service or the digital content can also be transferred.

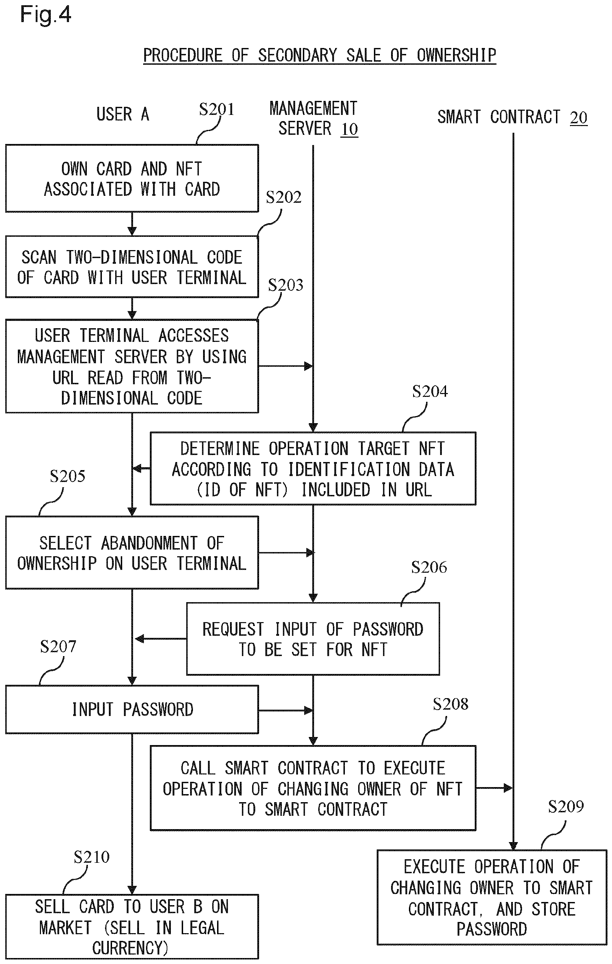

FIG. 4 shows a procedure of resale (secondary sale) of the card 40 by the user A.

At the time when the user A is going to resell the card 40, the user A owns the card 40 and the NFT 70 associated with the card 40 (step S201). The user A, with the terminal 31, scans the two-dimensional code 41 assigned to the card 40 (step S202). Through the scanning of the two-dimensional code 41, the terminal 31 reads the URL assigned to the card 40.

The terminal 31, having read the URL, accesses the management server 10 according to the URL (step S203). The management server 10 determines the NFT 70 to be an operation target, according to the NFT_ID included in the URL used for the access (step S204).

The management server 10 accesses the Ethereum network, and refers to the owner of the NFT 70 determined as the operation target. When the owner (user A) of the NFT 70 determined as the operation target is the same as the person (user A) who has accessed the management server 10, the management server 10 causes the terminal 31 of the user A as the person who has made the access to display a screen for selecting whether or not to abandon the ownership of the NFT 70.

If an application (e.g., wallet application) for referring to and transacting the NFT 70 is installed in the terminal 31 of the user A, the user A can refer to the NFT 70 he/she owns, using the application installed in the terminal 31, without scanning the card 40. Moreover, the application installed in the terminal 31 can cause the terminal 31 to display the screen for selecting whether or not to abandon the ownership of the NFT 70. Thus, if the application for referring to and transacting the NFT 70 is installed in the terminal 31 of the user A, steps from S201 to S203 in FIG. 4 can be omitted.

When the user A has performed an operation of selecting abandonment of the ownership of the NFT 70 on the terminal 31 (step S205), an abandonment request is transmitted from the terminal 31 to the management server 10.

Upon receiving the abandonment request, the management server 10 requests the user A to input a password (step S206). The password is set for the NFT 70. When a new owner of the card 40 registers the ownership of the NFT 70, the new owner is requested to input the password. The password is determined by the user A. When input of the password by the user A has been completed (step S207), the management server 10 calls the smart contract 20 to cause the smart contract 20 to execute an operation (abandonment of the NFT 70) of changing the owner of the NFT 70 as the operation target from the user A to the smart contract 20 (step S208). At the time of this calling, the password and the NFT 70 are transmitted from the user A to the smart contract 20. Thus, the NFT 70 enters the state of being deposited in the smart contract 20 (see step S1 in FIG. 1). At the time of calling the smart contract 20, the NFT_ID may also be transmitted to the smart contract 20.

Moreover, a fee (Gas) for calling the smart contract 20 and transmitting the NFT 70 is transmitted together with the NFT 70 and the like from the user A to the smart contract 20. The smart contract 20 stores the received fee (Gas) in the Ethereum address associated with the NFT 70. Therefore, the new owner of the NFT 70 need not pay the fee (Gas). The fee (Gas) may be directly transmitted from the user A to the Ethereum address associated with the NFT 70.

The called smart contract 20 changes the owner of the NFT 70 from the user A to the smart contract 20, and stores therein the received password (step S209). That is, the smart contract 20 stores therein the password that is set for the deposited NFT 70. The stored password is used for authentication of the new owner of the deposited NFT 70.

Upon completion of the above process, the user A sells the card 40 to the user B (see step S210, and steps S2, S3 in FIG. 1). The password set on the NFT 70 is transmitted from the user A to the user B. The user B uses the transmitted password for authentication that he/she is the new owner of the NFT 70.

While the smart contract 20 keeps the NFT 70 (before the ownership of the NFT 70 is transferred to the user B), the user A can change and refer to the password. Moreover, while the smart contract 20 keeps the NFT 70, the user A can retrieve the NFT 70 deposited in the smart contract 20, on condition that he/she inputs the correct password.

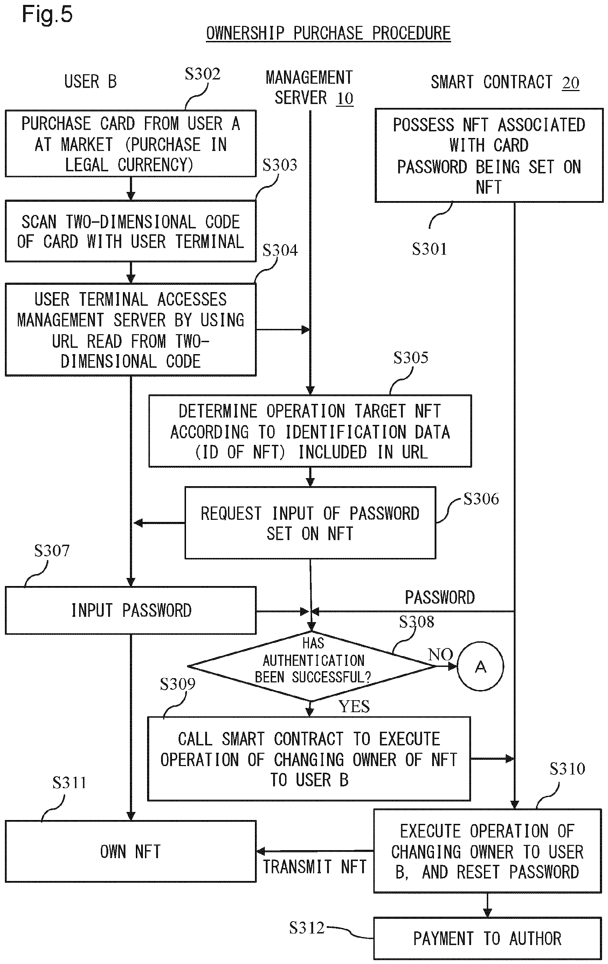

FIG. 5 shows an ownership registration (transfer) procedure when the user B purchases the card 40.

At the time when the user B purchases the card 40, the smart contract 20 possesses the NFT 70 associated with the card 40, and the password for the NFT 70 (step S301).

The user B purchases the card 40 at the online market 50 through payment of legal currency, and acquires the card 40 that is an actual item (step S302). The user B, with the terminal 32, scans the two-dimensional code 41 assigned to the card 40 (step S303). Through the scanning of the two-dimensional code 41, the terminal 32 reads the URL assigned to the card 40.

After reading the URL, the terminal 32 executes network access according to the URL (step S304). This allows the terminal 32 to access the management server 10. Upon receiving the network access from the terminal 32, the management server 10 determines the NFT 70 to be an operation target, according to the NFT_ID included in the URL used for the access (step S305). That is, when receiving the network access, the management server 10 acquires the NFT_ID included in the URL, and identifies the NFT 70 as the operation target, according to the acquired NFT_ID.

The management server 10 accesses the Ethereum network, and refers to the owner of the NFT 70 determined as the operation target. When the owner of the NFT 70 determined as the operation target is the smart contract 20, that is, when the smart contract 20 keeps the deposited NFT 70, the management server 10 requests the user B who has accessed the management server 10 (step S304) to input the password (step S306).

When the user A has inputted, on the terminal 32, the password transmitted from the user A (step S307), password authentication is performed. When the password authentication has been successful, the management server 10 calls the smart contract 20 to cause the smart contract 20 to execute an operation of changing the owner of the NFT 70 as the operation target from the smart contract 20 to the user B (step S309). When calling the smart contract 20, the management server 10 gives the NFT_ID (identifier of the NFT 70) to the smart contract 20. Thus, the smart contract 20 acquires the NFT_ID (identifier of the NFT 70). The smart contract 20 identifies the NFT 70 as the operation target, according to the NFT_ID.

The password authentication may be performed by the smart contract 20. That is, after step S305, the management server 10 calls the smart contract 20 (for password authentication). At the time of this calling, the management server 10 gives the NFT_ID (identifier of the NFT 70) of the NFT 70 as the operation target to the smart contract 20. Thus, the smart contract 20 acquires the NFT_ID (identifier of the NFT 70). The smart contract 20 identifies the NFT 70 as the operation target, according to the NFT_ID.

If a password is set on the NFT 70 as the operation target, the smart contract 20 executes a password authentication process. In the password authentication process, the smart contract 20 acquires the password from the user B. The password may be acquired from the user B directly or via the management server 10. When the password authentication has been successful, that is, when the user B has inputted the correct password, the smart contract 20 executes an operation of changing the owner of the NFT 70 as the operation target.

When the password authentication has been successful, the smart contract 20 changes the owner of the NFT 70 from the smart contract 20 to the user B. That is, the smart contract 20 transmits the NFT 70 that the smart contract 20 possesses, to the address (Ethereum address) of the user B who is the new owner (step S310). Thus, the user B who has inputted the password enters the state of owning the NFT 70 associated with the card 40.

The owner of the NFT 70 having been changed to the user B is recorded on the Ethereum network. The password is reset. This reset is performed by the smart contract 20.

A fee (Gas) for calling the smart contract 20 and transmitting the NFT 70 is paid from the Ether that the user A has paid in advance.

Through the aforementioned procedure, the user B can own the NFT 70 (step S311). The user B can also use a network service or content associated with the NFT 70. The user A, who has lost the ownership of the NFT 70, cannot use the network service or content associated with the NFT 70 anymore.

When the NFT 70 has been transferred to the user B, the smart contract 20 transmits a predetermined amount of Ether to the copyright holder (author) 60 (step S312). The Ether to be transmitted to the author 60 has already been paid by the user A. Thus, the copyright holder 60, who is a third party, can get a benefit from the transaction performed between the user A and the user B.

The procedure shown in FIG. 5 may be used for ownership registration when the user A purchases the card 40 (FIG. 3). When the procedure shown in FIG. 5 is used for the ownership registration when the user A purchases the card 40, the password is set by an administrator of the management server 10 or a dealer in advance of the sale of the card 40, and is transmitted to the user A. The password may be assigned to the card 40 through printing or the like.

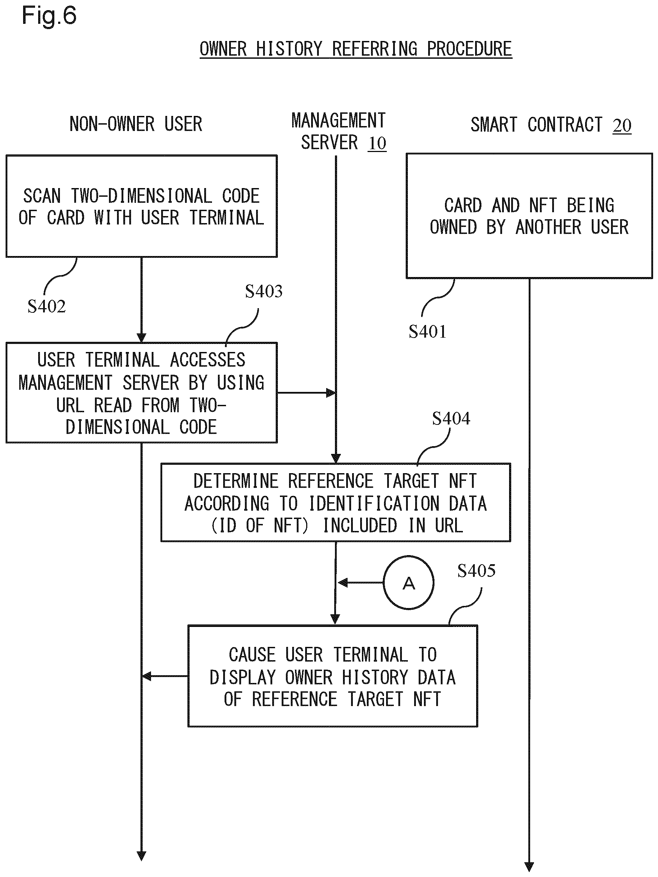

FIG. 6 shows an ownership history reference procedure. Hereinafter, the owner history reference procedure in the case where a user (non-owner user) who is not the owner of the card 40 can scan the two-dimensional code, will be described.

It is assumed that the card 40 and the NFT 70 are owned by another user (step S401). The owner history of the NFT 70 is recorded on the Ethereum network.

The non-owner user scans the two-dimensional code 41 assigned to the card 40 by using a terminal (step S402). Through the scanning of the two-dimensional code 41, the terminal reads the URL assigned to the card 40. The terminal, having read the URL, executes network access according to the URL (step S403). This allows the terminal to access the management server 10. Upon receiving the network access from the terminal, the management server 10 determines the NFT 70 to be a target, according to the NFT_ID included in the URL used for the access (step S404). That is, when receiving the network access, the management server 10 acquires the NFT_ID included in the URL, and identifies the NFT 70 as an operation target, according to the acquired NFT_ID.

The management server 10 accesses the Ethereum network, and refers to the owner of the NFT 70 determined as the target. If the owner of the NFT 70 determined as the operation target is the other user, the management server 10 acquires, from the Ethereum network, the owner history of the NFT 70 as the target, and causes the terminal of the non-owner user to display the owner history (step S405). The owner history is also displayed on the terminal 32 of the user B whose password authentication has failed in step S308 in FIG. 5.

The management server 10 may acquire the owner history from the smart contract 20. In this case, in order to acquire the owner history of the NFT 70, the management server 10 calls the smart contract 20. When calling the smart contract 20, the management server 10 gives the NFT_ID (identifier of the NFT 70) to the smart contract 20. Thus, the smart contract 20 acquires the NFT_ID (identifier of the NFT 70). The smart contract 20 identifies the NFT 70 whose owner history is required, according to the NFT_ID.

The present invention is not limited to the embodiment described above, and various modifications are possible.

### <3. Additional notes>

The present disclosure includes the following aspects.

(1) A method according to an embodiment is a method of operating a non-fungible token (NFT) in order to manage an object. The non-fungible token is issued by a blockchain capable of executing a smart contract. The non-fungible token is associated with the object.

The method according to the embodiment includes preparing the object to which data is assigned. The data is used for calling the smart contract.

The data used for calling the smart contract may include, for example, data for identifying the non-fungible token (NFT) to be operated by the smart contract. The data for identifying the NFT is, for example, at least one of an address of the NFT on the blockchain, and an ID of the NFT. The data used for calling the smart contract may be another data that is given to the smart contract when the smart contract is called. The data given to the smart contract may include, for example, a secret key of an Ethereum address to be a source of payment of a fee (e.g., Gas in Ethereum) for calling the smart contract.

The method according to the embodiment includes receiving, by the management server, network access using the data assigned to the object.

The method according to the embodiment includes calling, according to the data, the smart contract by the management server having received the network access, in order to cause the smart contract to execute the operation on the non-fungible token. The called smart contract executes the operation on the non-fungible token.

Through the aforementioned process, the smart contract for operating the non-fungible token (NFT) can be executed based on the data assigned to the object, whereby the NFT can be used for management of the object.

(2) Preferably, the data is included in a uniform resource locator (URL) assigned to the object. The URL may include a domain for network access to the management server. In this case, the URL assigned to the object is used for the network access to the management server, and the data included in the URL is used for calling the smart contract. The network access may be Internet access.

(3) Preferably, the uniform resource locator (URL) assigned to the object is expressed in a two-dimensional code. The two-dimensional code can be scanned with a two-dimensional code scanner, and is advantageous in mechanical URL reading.

(4) Preferably, the object is a tangible object.

(5) When the management server has received the network access from a terminal of a first user who is the owner of the non-fungible token, the operation on the non-fungible token by the smart contract preferably includes transmitting the non-fungible token from the first user to the smart contract. In this case, the first user can deposit the non-fungible token in the smart contract (see step S1 in FIG. 1).

(6) If the management server receives the network access from a terminal of a second user who is not the owner of the non-fungible token while the smart contract keeps the non-fungible token, the operation on the non-fungible token by the smart contract preferably includes transmitting the non-fungible token from the smart contract to the second user. In this case, the second user can acquire the non-fungible token from the smart contract (see step S6 in FIG. 1).

(7) If the management server receives the network access from the terminal of the second user who is not the owner of the non-fungible token while the smart contract keeps the non-fungible token, the management server preferably requests input of a password to the terminal of the second user. In this case, the password is required for acquisition of the non-fungible token, thereby preventing the non-fungible token from being acquired by a user who does not know the password.

(8) Preferably, the smart contract is configured to, when executing the operation on the non-fungible token, execute an operation of paying a crypto-asset on the blockchain to a right holder associated with the non-fungible token. In this case, the right holder can get a benefit when the operation on the non-fungible token is performed.

(9) If the management server receives the network access from the terminal of the second user who is not the owner of the non-fungible token, the management server preferably causes the terminal of the second user to display owner history data of the non-fungible token. In this case, the owner history of the non-fungible token, i.e., the owner history of the object, can be grasped. The value of the object or the non-fungible token may vary depending on who was the owner in the past. The owner history being referable allows easy confirmation of the owners in the past.

(10) A management server according to the embodiment is a management server for an object associated with a non-fungible token issued by a blockchain capable of executing a smart contract. The management server is provided with a processor configured to execute a process including: receiving network access using data that is assigned to the object and is used for calling the smart contract; and, upon receiving the access, calling the smart contract by using the data in order to cause the smart contract to execute an operation on the non-fungible token. A computer program for the above process is stored in a computer-readable non-transitory storage medium.

### REFERENCE SIGNS LIST

- 10: management server (management device)
- 20: smart contract
- 31: terminal
- 32: terminal
- 40: card (object)
- 41: two-dimensional code
- 50: online market
- 60: copyright holder (author)
- 70: non-fungible token
- A: user
- B: user

## Claims

1. A method of managing an object, the method comprising executing, by a smart contract implemented on a blockchain, an operation on a non-fungible token that is identified by an identifier included in a code assigned to the object.

2. The method according to claim 1, wherein the operation on the non-fungible token includes an operation for changing an owner of the non-fungible token.

3. The method according to claim 1 or 2, wherein the operation on the non-fungible token includes keeping, by the smart contract, the non-fungible token for an owner of the non-fungible token.

4. The method according to claim 3, wherein the operation on the non-fungible token further includes storing, in the smart contract, a password that is set for the non-fungible token being kept in the smart contract.

5. The method according to claim 4, wherein the operation on the non-fungible token further includes setting, by the smart contract, a user who has inputted the password, as a new owner of the non-fungible token being kept in the smart contract.

6. The method according to claim 5, further comprising, when the operation on the non-fungible token has been executed, executing, by the smart contract, an operation of paying a crypto-asset on the blockchain to a right holder associated with the non-fungible token.

7. The method according to any one of claims 1 to 6, further comprising:
acquiring, by the management device, the identifier included in the code assigned to the object; and
calling, by the management device, the smart contract via a network in order to cause the smart contract to execute the operation on the non-fungible token that is identified by the identifier.

8. A smart contract implemented on a blockchain,
the smart contract being configured to acquire an identifier included in a code assigned to an object to be managed, and execute an operation on a non-fungible token that is identified by the identifier.

9. The smart contract according to claim 8, wherein
the operation on the non-fungible token includes an operation for changing an owner of the non-fungible token.

10. The smart contract according to claim 8 or 9, wherein
the operation on the non-fungible token includes keeping the non-fungible token for an owner of the non-fungible token.

11. The smart contract according to claim 10, wherein the operation on the non-fungible token further includes storing a password that is set for the non-fungible token being kept in the smart contract.

12. The smart contract according to claim 11, wherein the operation on the non-fungible token further includes setting, by the smart contract, a user who has inputted the password, as a new owner of the non-fungible token being kept in the smart contract.

13. The smart contract according to claim 12, configured to, when the operation on the non-fungible token has been executed, further execute an operation of paying a crypto-asset on the blockchain to a right holder associated with the non-fungible token.

14. A device for managing an object, the device being configured to execute a process including: acquiring an identifier included in a code assigned to the object; and calling a smart contract implemented on a blockchain, via a network, in order to cause the smart contract to execute an operation on a non-fungible token that is identified by the identifier.
